# EUROPEAN PATENT APPLICATION

(11) **EP 4 542 117 A1**
(43) Date of publication of application: **23.04.2025**
(21) Application number: 24190572.8
(22) Date of filing: 24.07.2024
(51) Int. Cl.: F23K 5/00, F16K 31/06, F16K 31/524, F23N 1/00

(54) **PLUG VALVE ASSEMBLY AND GAS DEVICE**

(30) Priority: 20.10.2023 CN 202311373367; 20.10.2023 CN 202322838804 U
(71) Applicant: Wuhu Midea Smart Kitchen Appliance Manufacturing Co., Ltd., Wuhu, Anhui 241000 (CN)
(72) Inventor: ZHANG, Yibin, Wuhu (CN); QI, Zhengsheng, Wuhu (CN); HUANG, Huahong, Wuhu (CN)
(74) Representative: Ran, Handong

(57) **Abstract**

Provided are a plug valve assembly and a gas device. The plug valve assembly includes a solenoid valve and a toggle lever. The toggle lever includes a first push arm and a second push arm. The toggle lever is adapted to rotate in response to the first push arm being pushed. The second push arm is adapted to, in response to the rotation of the toggle lever, push the solenoid valve and deform a return spring of the solenoid valve. The return spring has an elastic coefficient smaller than an elastic coefficient of the second push arm. By designing the elastic coefficient of the second push arm to be greater than the elastic coefficient of the return spring of the solenoid valve, the second push arm can effectively drive the solenoid valve to implement attraction in response to the first push arm being pushed, and the second push arm can effectively implement deformation while being subjected to an excessive force to prevent the force from being transmitted to the solenoid valve, thereby avoiding damage to the solenoid valve.

## Description

### FIELD

The present application relates to the field of gas flow rate control technologies, and more particularly, to a plug valve assembly and a gas device.

### BACKGROUND

A gas device such as a gas stove, a gas water heater employs a plug valve assembly to control a flow rate of gas and thus to control fire intensity. The plug valve assembly generally includes a valve stem, a valve core, a toggle lever, and a solenoid valve. The valve stem may be pressed downwardly to enable unlocking. In this way, the valve core is driven to rotate, and a change in the flow rate of the gas is thus controlled. In addition, the valve stem is pressed downwardly to drive the toggle lever to rotate, enabling the toggle lever to act on the solenoid valve to deform a return spring of the solenoid valve. In this case, the solenoid valve is in an attraction state. After a stable burning flame is formed, the solenoid valve is still in the attraction state even if the valve stem is released. In this way, interruption of gas delivery is avoided. In the related art, when an excessive downward force is applied to the toggle lever, the force will be transmitted to the solenoid valve by the toggle lever, or when the toggle lever is subjected to a large impact (for example, when the valve stem is pressed downwardly quickly), a large impact will be imposed on the solenoid valve, which would easily damage the solenoid valve.

### SUMMARY

The present application aims to at least solve one of the technical problems in the related art to some extent. To this end, the present application provides a plug valve assembly.

In order to achieve the above object, the present application discloses a plug valve assembly. The plug valve assembly includes a solenoid valve and a toggle lever. The toggle lever includes a first push arm and a second push arm. The toggle lever is adapted to rotate in response to the first push arm being pushed. The second push arm is adapted to, in response to the rotation of the toggle lever, push the solenoid valve and deform a return spring of the solenoid valve.

Optionally, the return spring has an elastic coefficient smaller than an elastic coefficient of the second push arm.

Optionally, the second push arm has an abutment surface of an arc shape.

Optionally, the second push arm is adapted to push the solenoid valve via the abutment surface.

Optionally, the second push arm has an abutment portion of a shape curved away from the solenoid valve.

Optionally, a side of the abutment portion faces towards the solenoid valve is formed as the abutment surface.

Optionally, the second push arm has a rod portion. The abutment portion is disposed at an end of the rob portion and protrudes towards the solenoid valve with respect to the rod portion.

Optionally, the second push arm is provided with a reinforcement rib at a side of the second push arm facing away from the solenoid valve and/or at a side of the second push arm facing towards the solenoid valve.

Optionally, the toggle lever is of an integrated structure.

Optionally, the toggle lever is made of polyoxymethylene.

Optionally, the plug valve assembly includes a valve stem and a damping device.

Optionally, the valve stem is rotatable circumferentially and translatable axially.

Optionally, the valve stem is adapted to push the first push arm while translating axially.

Optionally, the damping device is adapted to provide damping on the rotation of the valve stem to form a plurality of stop sites.

Optionally, the valve stem penetrates the damping device and has a limit portion.

Optionally, the limit portion is adapted to be abutted against the damping device in response to an axial translation of the valve stem.

Optionally, the limit portion is further adapted to be stopped by the damping device in response to a circumferential rotation of the valve stem.

Optionally, the damping device has a stop portion defining a slid groove.

Optionally, the limit portion is adapted to abut with a bottom of the slide groove in response to the axial translation of the valve stem.

Optionally, the limit portion is adapted to move in an extending direction of the slide groove to be stopped by the stop portion in response to the circumferential rotation of the valve stem.

The present application also discloses a gas device. The gas device includes the above-mentioned plug valve assembly.

In the technical solution of the present application, by designing the elastic coefficient of the second push arm to be greater than the elastic coefficient of the return spring of the solenoid valve, the second push arm can effectively drive the solenoid valve to implement attraction in response to the first push arm being pushed, and the second push arm can be effectively deformed when an excessive force is exerted on the first push arm, to prevent the force from being transmitted to the solenoid valve, thereby avoiding damage to the solenoid valve.

Additional aspects and advantages of the embodiments of the present application will be provided at least in part in the following description, or will become apparent in part from the following description, or can be learned from the practice of the embodiments of the present application.

### BRIEF DESCRIPTION OF THE DRAWINGS

In order to clearly explain technical solutions of embodiments of the present application or in the related art, drawings used in the embodiments are briefly described below. The drawings as described below merely illustrate some embodiments of the present application. Based on structures shown in these drawings, other designs can be obtained by those skilled in the art without creative effort.
FIG. 1 is a schematic view of a plug valve assembly according to some embodiments of the present application.
FIG. 2 is a schematic view of a plug valve assembly according to some embodiments of the present application.
FIG. 3 is a cross-sectional view taken along line A-A in FIG. 1.
FIG. 4 is a cross-sectional view taken along line B-B in FIG. 2.
FIG. 5 is an exploded view of a plug valve assembly according to some embodiments of the present application.
FIG. 6 is a schematic view of cooperation between a valve stem, a toggle lever, and a solenoid valve in some embodiments.
FIG. 7 is a schematic view of cooperation among a valve stem, a damping device, and a valve cover according to some embodiments of the present application.
FIG. 8 is an exploded view of cooperation between a valve stem and a damping device according to some embodiments of the present application.
FIG. 9 is a schematic view of a toggle lever according to some embodiments of the present application.
FIG. 10 is a schematic view of a valve core according to some embodiments of the present application.
FIG. 11 is a schematic view of a damping device according to some embodiments of the present application.
FIG. 12 is a schematic view of a valve seat according to some embodiments of the present application.

### Explanation of reference numbers:

plug valve assembly 100, valve body 1000, valve seat 1100, valve cover 1200, notch 1210, accommodation chamber 1300, inner ring gas supply hole 1310, outer ring gas supply hole 1320, valve core 2000, gas inlet channel 2100, inner ring gas passageway 2200, outer ring gas passageway 2300, valve stem 3000, limit portion 3100, valve needle 3200, toggle lever 4000, first push arm 4100, second push arm 4200, rod portion 4210, abutment portion 4220, abutment surface 4221, cavity 4222, reinforcement rib 4230, rotary shaft 4300, solenoid valve 5000, return spring 5100, damping device 6000, housing 6100, through hole 6110, positioning protrusion 6120, stop portion 6130, slide groove 6140, groove bottom 6141, rotation member 6200, shaft hole 6210, positioning groove 6300, elastic abutting assembly 6400, elastic member 6410, and abutting member 6420.

Implementations of the objects, functional features, and advantages of the present application will be further described with reference to the embodiments and the drawings.

### DETAILED DESCRIPTION OF THE EMBODIMENTS

Technical solutions according to embodiments of the present application will be described clearly and completely below with reference to the accompanying drawings of the embodiments of the present application. Obviously, the embodiments described below are only a part of the embodiments of the present application, rather than all embodiments of the present application. On a basis of the embodiments of the present application, all other embodiments obtained by those skilled in the art without creative labor shall fall within the protection scope of the present application.

It should be noted that all directional indications (such as up, down, left, right, front, back) in the embodiments of the present application are only used to explain a relative positional relationship, movement, etc., between components in a specific posture (as shown in the drawings), and the directional indication will also change correspondingly if the specific posture changes.

In the description of the embodiments of the present application, unless specified or limited otherwise, the technical terms "connected", "fixed", etc., are understood broadly, such as a fixed connection or a detachable connection or connection as one piece; mechanical connection or electrical connection; direct connection or indirect connection through an intermediate; internal communication of two components or interaction relations between two components. For those skilled in the art, the specific meaning of the above-mentioned terms in the embodiments of the present application can be understood according to specific circumstances.

In addition, terms such as "first", "second", etc., are used herein for purposes of description and are not intended to indicate or imply relative importance or significance. Furthermore, the feature defined with "first", and "second" may comprise one or more these features distinctly or implicitly. In addition, the technical solutions in each embodiment may be combined with each other, but the combinations must be feasible to those of ordinary skill in the art. When the combination of technical solutions leads to inconsistencies or becomes unfeasible, such combination shall be deemed nonexistent and, therefore, not within the protection scope claimed in the present application.

According to embodiments of the present application, there is provided a plug valve assembly 100. The plug valve assembly 100 will be described in detail below with reference to a gas device. It may be understood that there are various gas devices, including but not limited to a gas stove, a gas water heater, and other appliances that require gas. The gas device includes a burner, and the plug valve assembly 100 is configured to control a flow rate of gas supplied to the burner to realize different fire intensity of the burner to meet different combustion needs. For example, when the gas device is a gas stove, the fire intensity of the burner may be controlled by the plug valve assembly 100 to meet cooking needs of different food materials. For another example, when the gas device is a gas water heater, the fire intensity of the burner may be controlled by the plug valve assembly 100 to adjust a temperature of water discharged from the gas water heater.

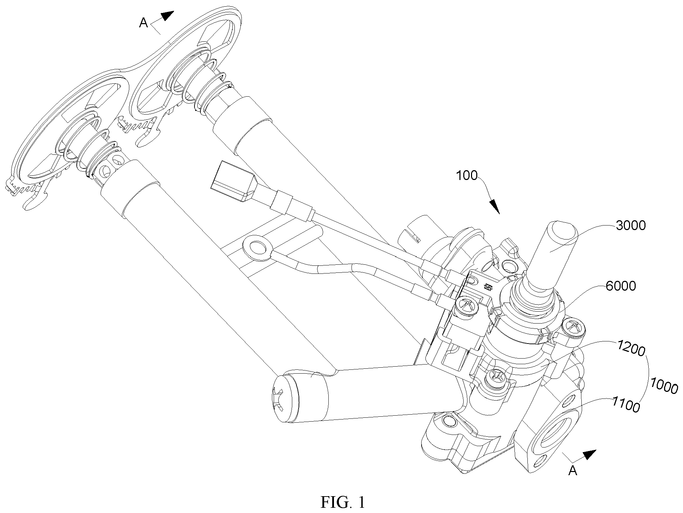

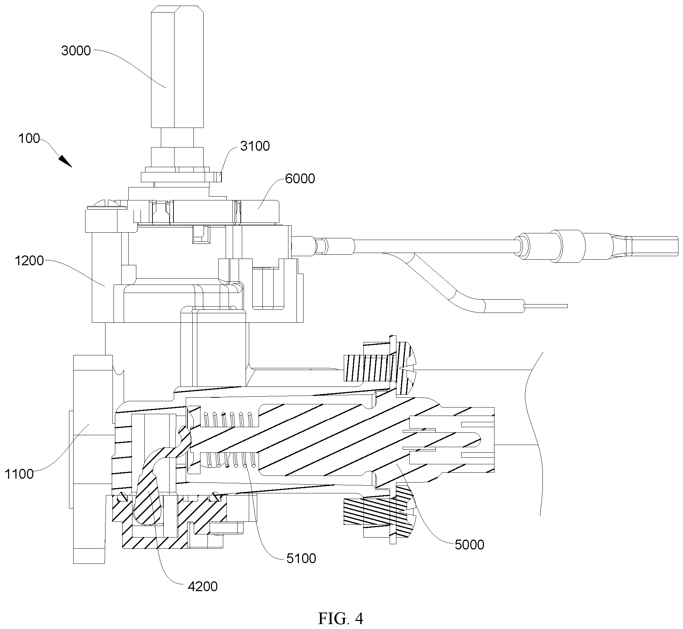

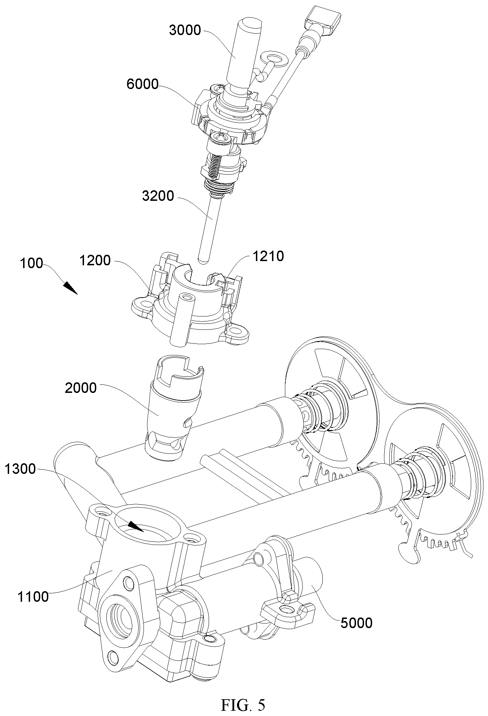

With reference to FIGS. 1, 2, 3, 4, 5, and 6, optionally, the plug valve assembly 100 includes a toggle lever 4000 and a solenoid valve 5000. The toggle lever 4000 includes a first push arm 4100 and a second push arm 4200. The toggle lever 4000 rotates in response to the first push arm 4100 being pushed. The second push arm 4200 is driven to push the solenoid valve 5000 in response to the rotation of the toggle lever 4000. The second push arm 4200 deforms a return spring 5100 of the solenoid valve 5000 in response to the second push arm 4200 pushing the solenoid valve 5000. An elastic coefficient of the second push arm 4200 needs to be designed to be greater than an elastic coefficient of the return spring 5100. In the present application, by designing the elastic coefficient of the second push arm 4200 to be greater than the elastic coefficient of the return spring 5100 of the solenoid valve 5000, the second push arm 4200 can effectively drive the solenoid valve 5000 to implement an attraction in response to the first push arm 4100 being pushed, and the second push arm 4200 can effectively implement deformation while being subjected to an excessive force to prevent the force from being transmitted to the solenoid valve 5000, thereby avoiding damage to the solenoid valve 5000.

In an exemplary embodiment of the present application, the plug valve assembly 100 includes a valve body 1000, a valve core 2000, a valve stem 3000, and a solenoid valve 5000. The valve body 1000 serves as a main structural component of the plug valve assembly 100, and other parts of the plug valve assembly 100 may be mounted at the valve body 1000, thereby enabling the plug valve assembly 100 to meet different functions. The valve body 1000 may be made of a copper material or other materials through casting and other processes. In order to satisfy mounting requirements of different parts, the valve body 1000 is generally an irregular part. With reference to FIG. 1, FIG. 2, and FIG. 12, the valve body 1000 mainly includes a valve seat 1100 and a valve cover 1200. The valve seat 1100 and the valve cover 1200 are assembled to form an accommodation chamber 1300 by being connected to each other. An inner ring gas supply hole 1310 and an outer ring gas supply hole 1320 are formed on a chamber wall of the accommodation chamber 1300. The inner ring gas supply hole 1310 is in communication with an inner ring nozzle (not shown) of a burner. The outer ring gas supply hole 1320 is in communication with an outer ring nozzle (not shown) of the burner.

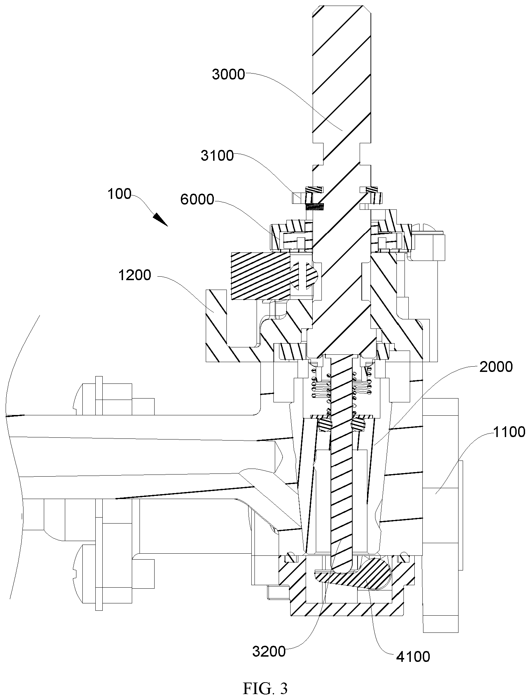

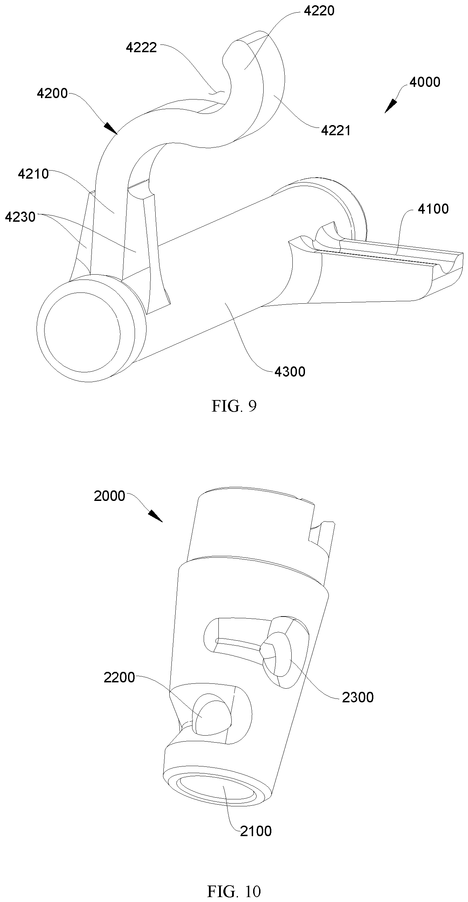

With reference to FIG. 3 and FIG. 10, the valve core 2000 is mounted in the accommodation chamber 1300. Further, the valve core 2000 is rotatable in the accommodation chamber 1300. A gas inlet channel 2100 is formed inside the valve core 2000, and the valve core 2000 has an inner ring gas passageway 2200 and an outer ring gas passageway 2300. The inner ring gas passageway 2200 is in communication with the gas inlet channel 2100. The outer ring gas passageway 2300 is in communication with the gas inlet channel 2100. The inner ring gas passageway 2200 cooperates with the inner ring gas supply hole 1310. The outer ring gas passageway 2300 cooperates with the outer ring gas supply hole 1320. When the valve core 2000 rotates in the accommodation chamber 1300, a communication area between the inner ring gas passageway 2200 and the inner ring gas supply hole 1310 changes, and a communication area between the outer ring gas passageway 2300 and the outer ring gas supply hole 1310 changes. As a result, an amount of gas flowing to the inner ring nozzle and an amount of gas flowing to the outer ring nozzle are changed, and the fire intensity is adjusted. That is, gas supplied from an external source needs to be delivered to an interior of the valve core 2000 through a pipeline and flows into the gas inlet channel 2100. The gas flowing into the gas inlet channel 2100 needs to flow out of the gas inlet channel 2100 through the inner ring gas passageway 2200, flow into the inner ring gas supply hole 1310, and then flow towards the inner ring nozzle, and then flow out from the outer ring gas passageway 2300, flow into the outer ring gas supply hole 1320, and then flow towards the outer ring nozzle. By rotating the valve core 2000, a relative position between the inner ring gas passageway 2200 and the inner ring gas supply hole 1310 gradually changes, and thus the communication area between the inner ring gas passageway 2200 and the inner ring gas supply hole 1310 is changed. In addition, a relative position between the outer ring gas passageway 2300 and the outer ring gas supply hole 1320 also gradually changes, and thus the communication area between the outer ring gas passageway 2300 and the outer ring gas supply hole 1320 may also be changed. The flow rate of the gas can be changed as the communication area changes. In this way, the fire intensity can be adjusted.

The rotation of the valve core 2000 is implemented by the valve stem 3000. The valve stem 3000 passes through the valve body 1000 and extends out of the valve body 1000. The valve stem 3000 is configured to translate axially and rotate circumferentially relative to the valve body 1000. A knob is generally mounted at an end portion of the valve stem 3000. A user may apply a force to the knob, and then the force is transmitted to the valve stem 3000. In an exemplary embodiment of the present application, the user applies a force to the valve stem 3000 in an axial direction of the valve stem 3000, and the valve stem 3000 is gradually pressed towards the valve body 1000 (that is, the valve stem 3000 translates axially and is pressed downwards). In this way, a childproof lock function (a structure of the childproof lock is not described in this embodiment, and reference may be made to the related art) is deactivated. After the childproof lock function is deactivated, the valve stem 3000 is rotatable in a circumferential direction thereof, to drive the valve core 2000 to rotate in the accommodation chamber 1300. In this way, the fire intensity can be adjusted.

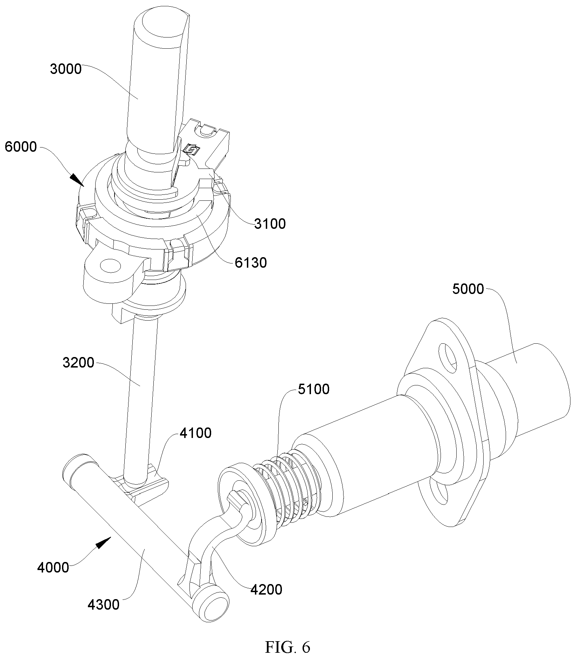

When the valve stem 3000 is pressed towards the valve body 1000, the valve stem 3000 may trigger the toggle lever 4000 to enable the toggle lever 4000 to rotate. It may be understood that the valve stem 3000 triggers the toggle lever 4000 to enable the toggle lever 4000 to rotate in various manners. For example, the valve stem 3000 may directly or indirectly apply a force to the toggle lever 4000 to trigger the toggle lever 4000. For example, with reference to FIG. 6, the valve stem 3000 triggers the toggle lever 4000 by indirectly applying a force to the toggle lever 4000. The valve stem 3000 is connected to a valve needle 3200. The valve needle 3200 penetrates the valve core 2000 and corresponds to the toggle lever 4000. When the valve stem 3000 is pressed towards the valve body 1000, the valve stem 3000 drives the valve needle 3200 to push the toggle lever 4000, and the toggle lever 4000 is thus triggered to rotate. The toggle lever 4000 then pushes the solenoid valve 5000, and the gas supply is in turn initiated by the solenoid valve 5000. As a result, the gas can flow into the gas inlet channel 2100 of the valve core 2000, and then is delivered to the inner ring nozzle and the outer ring nozzle through the inner ring gas passageway 2200 and the outer ring gas passageway 2300, respectively.

When the toggle lever 4000 pushes the solenoid valve 5000 and the gas supply is initiated by the solenoid valve 5000, the solenoid valve 5000 itself is in an attraction state. The structure of the solenoid valve 5000 may be found in the related art. It should be understood that an induction needle may be provided near the burner. Through the arrangement of the induction needle, the solenoid valve 5000 is still in the attraction state to maintain the gas supply, even if the toggle lever 4000 does not apply a force on the solenoid valve 5000 (the valve stem 3000 is reset, that is, the user removes the downward force on the valve stem 3000 after the ignition is completed, and the valve stem 3000 may be reset). A principle of the induction needle is that a thermoelectric potential is generated after the induction needle is heated by a flame, the thermoelectric potential generates a current in a circuit in which the induction needle is connected to the solenoid valve 5000, and the generated current excites the corresponding components of the solenoid valve 5000 to generate magnetism. In this way, the solenoid valve 5000 is in the attraction state. Once the solenoid valve 5000 is in the attraction state, the gas supply is initiated.

In an exemplary embodiment of the present application, when the valve stem 3000 is pressed towards the valve body 1000, the valve stem 3000 triggers the toggle lever 4000 by the valve needle 3200, and the toggle lever 4000 thus pushes the solenoid valve 5000 to enable the solenoid valve 5000 to be in the attraction state. At this time, the gas supply is initiated by the solenoid valve 5000. The gas flows into the gas inlet channel 2100 through the solenoid valve 5000, then flows out of the inner ring gas passageway 2200 and the outer ring gas passageway 2300, and flows towards the inner ring nozzle and the outer ring nozzle through the inner ring gas supply hole 1310 and the outer ring gas supply hole 1320, respectively. The gas ejected from the inner ring nozzle and the gas ejected from the outer ring nozzle are ignited to form a flame. The flame can heat the induction needle, and the thermoelectric power generated by the induction needle facilitates the solenoid valve 5000 to maintain the attraction state. Even if the valve stem 3000 is released, the solenoid valve 5000 would not shut off the gas supply. The thermoelectric potential of the induction needle disappears after flameout, and the solenoid valve 5000 blocks/interrupts the gas supply by means of the elastic force of the return spring 5100. Therefore, safety can be ensured.

When the downward force/degree of the axial movement of the toggle lever 4000 is too large, the large force may be transmitted to the solenoid valve 5000 by the toggle lever 4000, or when an impact on the toggle lever 4000 is too large (for example, the valve stem 3000 is pressed down quickly), there is a large impact on the solenoid valve 5000, which can easily cause damage to the solenoid valve 5000. In order to solve this problem, the structure of the toggle lever 4000 and the structure of the solenoid valve 5000 are optimized in this embodiment.

With reference to FIGS. 6 and 9, the toggle lever 4000 has a rotary shaft 4300, a first push arm 4100, and a second push arm 4200. The first push arm 4100 is disposed at an end of the rotary shaft 4300, and the second push arm 4200 is disposed at another end of the rotary shaft 4300. The first push arm 4100 and the second push arm 4200 are arranged in a V shape in space, and the toggle lever 4000 is rotatable by means of the rotary shaft 4300. For example, the toggle lever 4000 is rotatably disposed in the valve body 1000. The valve body 1000 has a corresponding hole through which the rotary shaft 4300 passes. The first push arm 4100 is located at a side of the hole, and the second push arm 4200 is located at another side of the hole. When the valve stem 3000 pushes the first push arm 4100, the toggle lever 4000 rotates by means of the rotary shaft 4300, thereby driving the second push arm 4200 to rotate correspondingly to push the solenoid valve 5000 to move (to be attracted) in a rotation path of the second push arm 4200. In this embodiment, the second push arm 4200 is designed into an elastic structure, and an elastic coefficient of the second push arm 4200 is designed to be greater than an elastic coefficient of the return spring 5100 of the solenoid valve 5000. That is, the second push arm 4200 is more difficult to be deformed than the return spring 5100 of the solenoid valve 5000. In this way, when the toggle lever 4000 rotates, the second push arm 4200 can effectively push the solenoid valve 5000 to deform (such as compress) the return spring 5100 of the solenoid valve 5000. As a result, the solenoid valve 5000 is in the attraction state. In a case where the first push arm 4100 is subjected to a greater force, since the attraction of the solenoid valve 5000 has reached its limit (for example, a movable iron core and a static iron core of the solenoid valve 5000 reach their respective limit), the second push arm 4200 may be elastically deformed. Therefore, the force transmitted to the solenoid valve 5000 is reduced, which avoids the damage to the solenoid valve 5000, and also facilitates reduction on the impact transmitted to the solenoid valve 5000. In this way, a service life of the solenoid valve 5000 can be effectively prolonged.

With continued reference to FIGS. 6 and 9, optionally, the second push arm 4200 has an abutment surface 4221 of an arc shape. The second push arm 4200 is adapted to push the solenoid valve 5000 via the abutment surface 4221. By designing the abutment surface 4221 into the arc shape, frictional resistance between the second push arm 4200 and the solenoid valve 5000 is reduced, allowing the second push arm 4200 to easily push the solenoid valve 5000.

In an exemplary embodiment of the present application, when the first push arm 4100 is pushed, the entire toggle lever 4000 rotates to rotate the second push arm 4200. A rotation path of the abutment surface 4221 of the second push arm 4200 in space is of an arc shape. The movement of the solenoid valve 5000 is generally designed as linear reciprocating motion. Therefore, when the second push arm 4200 rotates, a relative position between a part of the solenoid valve 5000 in contact with the second push arm 4200 and the abutment surface 4221 of the second push arm 4200 will change. In this embodiment, the abutment surface 4221 is designed into the arc shape. In this way, when the above mentioned relative position changes during the rotation of the second push arm 4200, contact resistance between the second push arm 4200 and the solenoid valve 5000 can be reduced, allowing the solenoid valve 5000 to easily move into the attraction state.

With continued reference to FIGS. 6 and 9, optionally, the second push arm 4200 has an abutment portion 4220. The abutment portion 4220 is of a shape curved away from the solenoid valve 5000. The abutment surface 4221 is designed to be located at a side of the abutment portion 4220 facing towards the solenoid valve 5000.

In an exemplary embodiment of the present application, as mentioned above, the second push arm 4200 needs to be designed as an elastic arm. The elastic coefficient of the second push arm 4200 should be neither too large nor too small, and should be within an appropriate range. If the elastic coefficient of the second push arm 4200 is too large, the second push arm 4200 would not be elastically deform in time when the toggle lever 4000 is subjected to a greater force. If the elastic coefficient of the second push arm 4200 is too small, an effect of the second push arm 4200 in pushing the solenoid valve 5000 will be greatly reduced.

In this embodiment, with the curved shape of the abutment portion 4220, a cavity 4222 is defined at a side of the abutment portion 4220 facing away from the solenoid valve 5000, and therefore the abutment portion 4220 also has a predetermined elasticity. In this way, the elastic design of the entire second push arm 4200 is facilitated, and too large elastic coefficient of the second push arm 4200 can be avoided. In particular, the cavity 4222 is defined at the side of the abutment portion 4220 facing away from the solenoid valve 5000. In a moment of a large impact on the toggle lever 4000, the arrangement of the abutment portion 4220 can absorb the impact and thus further reduce the damage to the solenoid valve 5000.

With continued reference to FIGS. 6 and 9, optionally, the second push arm 4200 further has a rod portion 4210. The aforementioned abutment portion 4220 is disposed at an end of the rod portion 4210. In addition, the abutment portion 4220 is designed to protrude towards the solenoid valve 5000.

In an exemplary embodiment of the present application, the abutment portion 4220 is disposed at an end of the rod portion 4210, and another end of the rod portion 4210 is disposed at the rotary shaft 4300. Since the abutment portion 4220 is of the shape curved away from the solenoid valve 5000, in a case where the abutment portion 4220 is designed to protrude towards the solenoid valve 5000 with respect to the rod portion 4210, a transition between the abutment portion 4220 and the rod portion 4210 will also form a curved structure to cooperate with the curved structure of the abutment portion 4220. Further, the two curved structures have different curve directions, which effectively improve toughness and strength of the entire second push arm 4200. In this way, the second push arm 4200 can absorb the impact easily and is less likely to be broken under a large impact.

With continued reference to FIGS. 6 and 9, optionally, the second push arm 4200 also has a reinforcement rib 4230. Since the second push arm 4200 needs to be designed to have a predetermined elasticity, in order to further prevent the second push arm 4230 from being broken under the large impact, the elasticity and strength of the second push arm 4200 can be balanced with the reinforcement rib 4230.

When the second push arm 4200 pushes the solenoid valve 5000 and the second push arm 4200 is reset, the second push arm 4200 can be deformed towards the solenoid valve 5000 and away from the solenoid valve 5000, respectively. In order to better protect the second push arm 4200, the reinforcement rib 4230 is disposed at each of a side of the second push arm 4200 facing towards the solenoid valve 5000 and a side of the second push arm 4200 facing away from the solenoid valve 5000, which greatly improves the performance of the second push arm 4200. In an exemplary embodiment of the present application, the reinforcement rib 4230 may be disposed on the rod portion 4210.

With continued reference to FIGS. 6 and 9, optionally, the toggle lever 4000 is of an integrated structure. The so-called integrated structure means that the toggle lever 4000 is manufactured through an integrated manufacturing technology, such as integrated molding, casting, and three-dimensional printing. In this way, there are no connection seams among the parts of the toggle lever 4000 (the rotary shaft 4300, the second push arm 4200, and the first push arm 4100), which facilitates improving the mechanical properties of the toggle lever 4000. Moreover, the toggle lever 4000 may be constructed as an individual component by designing the toggle lever 4000 as the integrated structure, reducing the number of materials, simplifying an assembly process of the plug valve assembly, thus lowering a production difficulty and labor cost. For example, the toggle lever 4000 is manufactured through integrated injection molding, which is relatively mature and facilitates an improvement in production efficiency. There are many materials for the toggle lever 4000, as long as the materials can ensure that the second push arm 4200 has desired elasticity after manufacturing the toggle lever 4000. For example, the toggle lever 4000 is made of polyoxymethylene (POM), which is a common raw material with good physical, mechanical, and chemical properties, especially excellent friction resistance that can avoid wear caused by repeated pushing between the second push arm 4200 and the solenoid valve 5000.

Generally speaking, most plug valve assemblies 100 are designed for stepless adjustment. It is inconvenient for the user to know current fire intensity when using the plug valve assembly 100 to adjust the fire intensity. As a result, the user needs to bend down to observe flame intensity to determine the fire intensity, and thus the adjustment of the fire intensity is cumbersome. In view of this, with reference to FIGS. 1, 5, 6, and 11, optionally, the plug valve assembly 100 further includes a damping device 6000. The damping device 6000 is configured to provide damping on the rotation of the valve stem 3000 to form a plurality of stop sites. Each stop site corresponds to specific fire intensity. In this way, the user will be familiar with the fire intensity of each stop site after the user has used the plug valve assembly 100 for a period of time. The user may acquire the current fire intensity after the valve stem 3000 is rotated to the corresponding stop site, which is more convenient and faster.

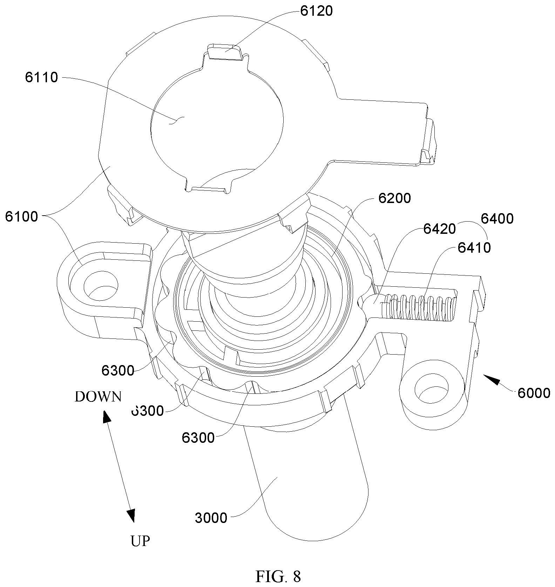

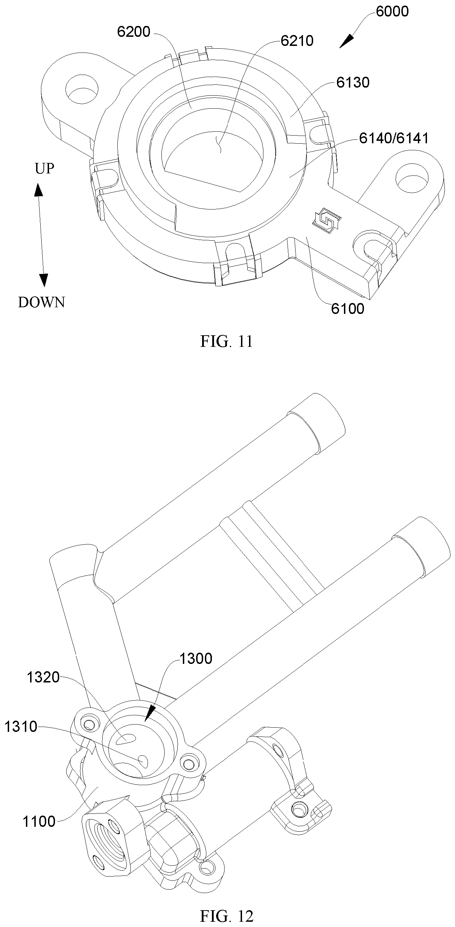

It should be understood that the damping device 6000 has many types of structures. For example, with reference to FIGS. 8 and 11, the damping device 6000 includes a housing 6100 and a rotation member 6200. The housing 6100 has a through hole 6110 in a thickness direction of the housing 6100. The housing 6100 is fixedly mounted to the valve body 1000 to allow for the mounting of the damping device 6000. The rotation member 6200 is accommodated in the housing 6100 and rotatable relative to the housing 6100. The rotation member 6200 has a shaft hole 6210. The shaft hole 6210 is in communication with the through hole 6110. The valve stem 3000 passes through the shaft hole 6210. The rotation member 6200 is linked with the valve stem 3000. One of the rotation member 6200 and the housing 6100 has a plurality of positioning grooves 6300 arranged at intervals circumferentially, and the other one of the rotation member 6200 and the housing 6100 is provided with an elastic abutting component 6400. In the process that the valve stem 3000 drives the rotation member 6200 to rotate, the elastic abutting component 6400 is snapped into one of the plurality of positioning grooves 6300. Each positioning groove 6300 corresponds to a specific communication region between the inner ring gas passageway 2200 and the inner ring gas supply hole 1310 and a specific communication region between the outer ring gas passageway 2300 and the outer ring gas supply hole 1320. Therefore, the plurality of positioning grooves 6300 are arranged to form the plurality of stop sites. In this way, the adjustment of the fire intensity is more convenient.

In one embodiment, the plurality of positioning grooves 6300 is formed at the rotation member 6200, and the elastic abutting assembly is mounted on the housing 6100. In an exemplary embodiment of the present application, the elastic abutting assembly 6400 includes an elastic member 6410 and an abutting member 6420. The elastic member 6410 has an end abutted against the housing 6100 and another end abutted against the abutting member 6420. The elastic member 6410 is configured to provide an elastic force to drive the abutting member 6420 to be abutted against a wall of the positioning groove 6300 and generate a prompt sound. In the process that the valve stem 3000 drives the rotation member 6200 to rotate, the abutting member 6420 is abutted against and disengaged from different positioning grooves 6300 in sequence. As such, a "click-click" prompt sound is emitted, which is easier for the user to be informed of the adjusting of the fire intensity.

It should be understood that the damping device 6000 is configured to provide a stop site when the valve stem 3000 rotates in the circumferential direction thereof. Therefore, the valve stem 3000 needs to avoid interference with the damping device 6000 when the valve stem 3000 translates in the axial direction thereof. That is, the valve stem 3000 may pass through the rotation member 6200 while translating axially, and the valve stem 3000 may be fixed relative to the rotation member 6200 to drive the rotation member 6200 to rotate while moving circumferentially. For example, the shaft hole 6210 of the rotation member is a non-circular hole, and the valve stem 3000 is axially translatable relative to the rotation member 6200 and circumferentially fixed relative to the rotation member 6200. In this way, the valve stem 3000 may axially translate towards the valve body 1000 (the valve stem 3000 is pressed downwards).

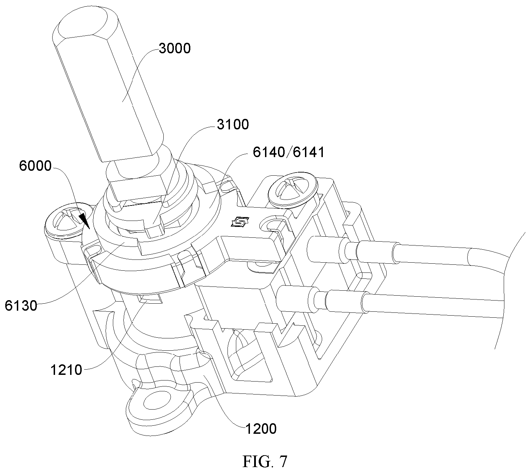

With reference to FIG. 7, optionally, the valve stem 3000 is required to penetrate the damping device 6000. That is, the damping device 6000 is sleeved around the valve stem 3000, and the valve stem 3000 has a limit portion 3100. The limit portion 3100 is configured to be abutted against the damping device 6000 in response to an axial translation of the valve stem 3000. In this way, a degree to which the valve stem 3000 axially translates towards the valve body 1000 (a degree to which the valve stem 3000 is pressed downwards), forming a maximum stroke for the valve stem 3000 to be pressed downwards.

In an exemplary embodiment of the present application, in order to facilitate the mounting of the damping device 6000, the damping device 6000 is mounted outside the valve body 1000. That is, the damping device 6000 is exposed from the valve body 1000. When the damping device 6000 and the valve stem 3000 are both mounted at the valve body 1000, a part of the valve stem 3000 extends into the valve body 1000, and another part of the valve stem 3000 is exposed from the valve body 1000 and the damping device 6000.

With reference to FIGS. 7 and 8, one of the damping device 6000 and the valve body 1000 is provided with a positioning protrusion 6120, and the other one of the damping device 6000 and the valve body 1000 has a notch 1210. The positioning protrusion 6120 is caught into the notch 1210. The damping device 6000 can be quickly positioned and mounted to the valve body 1000 by catching the positioning protrusion 6120 into the notch 1210. Thus, later further fastening between the damping device 6000 and the valve body 1000 is facilitated. The damping device 6000 can also be prevented from rotating along with the rotation of the valve stem 3000 by catching the positioning protrusion 6120 into the notch 1210.

It should be understood that since the valve stem 3000 is required to axially translate towards the valve body 1000 for the ignition (the valve stem 3000 is pressed downwards), in this embodiment, by providing the limit portion 3100 at the valve stem 3000, when the valve stem 3000 moves towards the valve body 1000 until the limit portion 3100 abuts with an upper surface of the damping device 6000 (with an orientation shown in FIG. 11 as a reference), at this time, the valve stem 3000 has moved to its limit and cannot move further. As a result, an excessive force can be prevented from being exerted on the toggle lever 4000 and the solenoid valve 5000. The valve stem 3000 is limited by abutting the limit portion 3100 against the damping device 6000, which has a simple structure and is easy to be implemented. The limit portion 3100 may have various structures. The limit portion 3100 and the valve stem 3000 may be integrally formed, or the limit portion 3100 may be a separate component connected to the valve stem 3000 by a connection means. For example, the limit portion 3100 is a retaining ring snapped into the valve stem 3000. In other embodiments of the present application, the limit portion 3100 has many types of structure, and details thereof will be omitted herein.

It should be understood that since the valve stem 3000 is required to rotate circumferentially to drive the valve core 2000 to rotate so as to adjust the fire intensity, in order to limit the circumferential rotation of the valve stem 3000 to avoid the unlimited circumferential rotation of the valve stem 3000, optionally, with reference to FIG. 7, the limit portion 3100 is further configured to be stopped by the damping device 6000 in response to the circumferential rotation of the valve stem 3000. As such, the degree to which the valve stem 3000 rotates circumferentially is limited. That is, with the cooperation between the damping device 6000 and the limit portion 3100, the damping device 6000 can not only realize the function of the plurality of stop sites but also limit the axial translation of the valve stem 3000 and the circumferential rotation of valve stem 3000. In this way, the structure more is more compact.

The damping device 6000 cooperates with the limit portion 3100 as follows. With reference to FIG. 7, the damping device 6000 has a stop portion 6130. The stop portion 6130 defines a slide groove 6140. For example, the stop portion 6130 is of a C-shape. In this way, the slide groove 6140 is defined between two ends of the stop portion 6130, and the stop portion 6130 and the slide groove 6140 cooperate with each other to surround the valve stem 3000. When the valve stem 3000 translates in the axial direction thereof and moves towards the valve body 1000 (the valve stem 3000 is pressed downwardly) until the stop portion 3100 abuts with a bottom 6141 of the slide groove 6140, the valve stem 3000 reaches its movement limit and can no longer be pressed down. As a result, the force can be prevented from being transmitted to the toggle lever 4000 and then to the solenoid valve 5000, which would result in the damage to the solenoid valve 5000. On this basis, when the valve stem 3000 rotates circumferentially, the limit portion 3100 moves in an extending direction of the slide groove 6140 until the limit portion 3100 is stopped by the stop portion 6130, which indicates that the valve stem 3000 reaches its circumferential rotation limit.

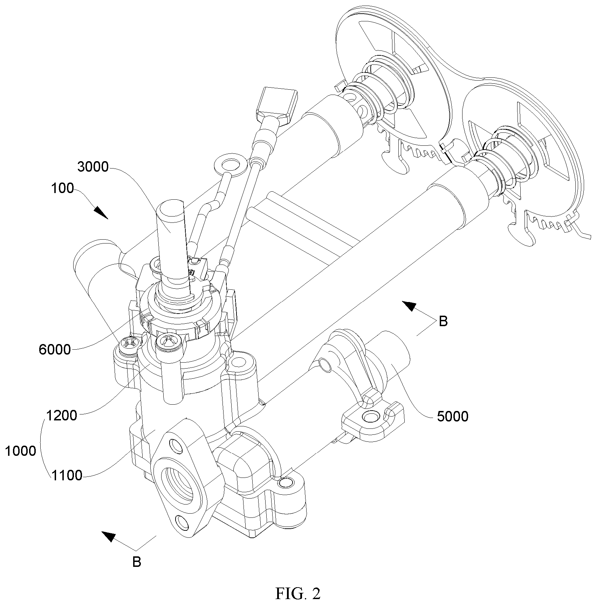

According to embodiments of the present application, there is provided a gas device. With reference to FIGS. 1 and 2, the gas device includes the plug valve assembly 100 as described in the above embodiments. The plug valve assembly 100 includes a toggle lever 4000 and a solenoid valve 5000. The toggle lever 4000 includes a first push arm 4100 and a second push arm 4200. The toggle lever 4000 rotates in response to the first push arm 4100 being pushed. The second push arm 4200 is driven to push the solenoid valve 5000 in response to the rotation of the toggle lever 4000. The second push arm 4200 deforms a return spring 5100 of the solenoid valve 5000 in response to the second push arm 4200 pushing the solenoid valve 5000. An elastic coefficient of the second push arm 4200 needs to be designed to be greater than an elastic coefficient of the return spring 5100. In this embodiment, by designing the elastic coefficient of the second push arm 4200 to be greater than the elastic coefficient of the return spring 5100 of the solenoid valve 5000, the second push arm 4200 can effectively drive the solenoid valve 5000 to implement an attraction in response to the first push arm 4100 being pushed, and the second push arm 4200 can effectively implement deformation while being subjected to an excessive force to prevent the force from being transmitted to the solenoid valve 5000, thereby avoiding damage to the solenoid valve 5000. It should be understood that there are various gas devices, including but not limited to a gas stove, a gas water heater, and other appliances that require gas. The gas device includes a burner, and the plug valve assembly 100 is configured to control a flow rate of gas supplied to the burner to realize different fire intensity of the burner to meet different combustion needs. For example, when the gas device is a gas stove, the fire intensity of the burner may be controlled by the plug valve assembly 100 to meet cooking needs of different food materials. For another example, when the gas device is a gas water heater, the fire intensity of the burner may be controlled by the plug valve assembly 100 to adjust a temperature of water discharged from the gas water heater.

Since the plug valve assembly 100 of the gas device has the structure of the above embodiment, the gas device at least has the beneficial effects as described in the technical solutions of the above embodiments, and details thereof will be omitted herein.

## Claims

1. A plug valve assembly (100), comprising:
a solenoid valve (5000); and
a toggle lever (4000) comprising a first push arm (4100) and a second push arm (4200), wherein:
the toggle lever (4000) is adapted to rotate in response to the first push arm (4100) being pushed; and
the second push arm (4200) is adapted to, in response to the rotation of the toggle lever (4000), push the solenoid valve (5000) and deform a return spring (5100) of the solenoid valve (5000), the return spring (5100) having an elastic coefficient smaller than an elastic coefficient of the second push arm (4200).

2. The plug valve assembly (100) according to claim 1, wherein the second push arm (4200) has an abutment surface (4221) of an arc shape, the second push arm (4200) adapted to push the solenoid valve (5000) via the abutment surface (4221).

3. The plug valve assembly (100) according to claim 2, wherein the second push arm (4200) has an abutment portion (4220) of a shape curved away from the solenoid valve (5000), a side of the abutment portion (4220) facing towards the solenoid valve (5000) formed as the abutment surface (4221).

4. The plug valve assembly (100) according to claim 3, wherein the second push arm (4200) has a rod portion (4210), the abutment portion (4220) disposed at an end of the rob portion (4210) and protruding towards the solenoid valve (5000) with respect to the rod portion (4210).

5. The plug valve assembly (100) according to claim 1, wherein the second push arm (4200) is provided with a reinforcement rib (4230) at a side of the second push arm (4200) facing away from the solenoid valve (5000) and/or at a side of the second push arm (4200) facing towards the solenoid valve (5000).

6. The plug valve assembly (100) according to any one of claims 1-5, wherein the toggle lever (4000) is of an integrated structure.

7. The plug valve assembly (100) according to claim 6, wherein the toggle lever (4000) is made of polyformaldehyde.

8. The plug valve assembly (100) according to any one of claims 1-7, further comprising:
a valve stem (3000) rotatable circumferentially and translatable axially, the valve stem (3000)adapted to push the first push arm (4100) while translating axially; and
a damping device (6000) adapted to provide damping on a rotation of the valve stem (3000) to form a plurality of stop sites.

9. The plug valve assembly (100) according to claim 8, wherein:
the valve stem (3000) penetrates the damping device (6000); and
the valve stem (3000) has a limit portion (3100) adapted to abut against the damping device (6000) in response to an axial translation of the valve stem (3000).

10. The plug valve assembly (100) according to claim 9, wherein the limit portion (3100) is further adapted to be stopped by the damping device (6000) in response to a circumferential rotation of the valve stem (3000).

11. The plug valve assembly (100) according to claim 10, wherein:
the damping device (6000) has a stop portion (6130) defining a slide groove (6140); and
the limit portion (3100) is adapted to abut with a bottom of the slide groove (6140) in response to the axial translation of the valve stem (3000), and move in an extending direction of the slide groove (6140) to be stopped by the stop portion (6130) in response to the circumferential rotation of the valve stem (3000).

12. A gas device, comprising the plug valve assembly (100) according to any one of claims 1 to 11.
